# EUROPEAN PATENT APPLICATION

(11) **EP 4 624 977 A1**
(43) Date of publication of application: **01.10.2025**
(21) Application number: 24190587.6
(22) Date of filing: 24.07.2024
(51) Int. Cl.: G01S 5/14, G01S 13/76

(54) **METHOD OF LOCATING A UWB-ENABLED MOBILE DEVICE IN A UWB BASED TRANSIT DEPLOYMENT**

(30) Priority: 26.03.2024 IN 202441023686
(71) Applicant: NXP B.V., 5656 AG Eindhoven (NL)
(72) Inventor: Parthasarathi, Srivathsa Masthi, 5656AG Eindhoven (NL); Egger, Stefan, 5656AG Eindhoven (NL); Venkateshaiah, Sreenivasaiah Hanumapura, 5656AG Eindhoven (NL); Bedi, Preet, 5656AG Eindhoven (NL)
(74) Representative: Krott, Michel

(57) **Abstract**

A method of locating a UWB enabled mobile device (10) in a UWB based transit deployment (100) is disclosed. The method implements a trilateration procedure between three known anchor positions of transit gates and implements position determination based on determination of distance values. In effect, by means of the anchors a maximal amount of mobile devices can be recognized. Thus, a scalable transit scenario is implemented without needing additional anchor infrastructure. A discovery process is implemented, in which user are recognized in order to pay via fare transaction. The whole process of discovery, gate selection und fare transaction is thus possible without DL-TDoA infrastructure. In this way, advantageously, DL-TDoA infrastructure can be saved to a maximum extent. A following fare transaction can be carried out as defined by a transit provider.

## Description

### TECHNICAL FIELD

The present disclosure relates to the technical field of Ultra-wideband (UWB) communication. In particular, the present disclosure relates to a method of locating a UWB-enabled mobile device in a UWB based transit deployment. Furthermore, the present disclosure relates to a UWB based transit deployment. Furthermore, the present disclosure relates to a UWB-enabled mobile device. Furthermore, the present disclosure relates to computer implemented methods for carrying out the proposed method.

### BACKGROUND

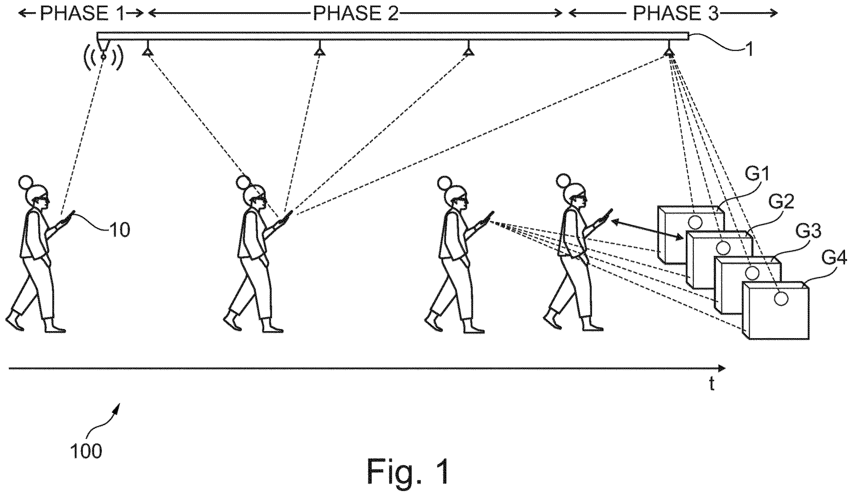

FiRa^{™} UWB, also known as FiRa Ultra-Wideband, is a high-speed wireless communication technology that operates at very high frequencies, typically between 3.1 GHz and 10.6 GHz. Ultra-Wideband (UWB) technology is characterized by its ability to transmit large amounts of data over short distances, making it ideal for applications such as high-speed data transfer, location tracking, and radar imaging. In the FiRa proposed method of transit deployment proposes to have DL-TDoA (Downlink Time-division of Arrival) method to allow the user closer to the gate to participate in the TWR (Two-way Ranging) with the gate is shown. This whitepaper mainly describes the below three phases shown in FIG. 1. One recognizes gate anchors A1...A8 being mounted on a ceiling 1. Furthermore, the gates G1...G4 represent UWB units comprising one internal gate anchor each (not shown). The following phase are carried out:
- Phase 1: discovery process at the station entrance
- Phase 2: untracked navigation when walking to the gate or to the platform
- Phase 3: gate selection and fare transaction when approaching and walking through the gate

A user time line indicates that the sessions between the gate anchors and the UWB enabled mobile device 10 are started at different times. Different requirements have been defined for the different phases. In the station entry area, a Bluetooth^{®} Low Energy beacon is used to wake up the passenger's UWB enabled mobile device 10. Since broadcast capability is sufficient, this solution is independent of the number of passengers entering the station. During the time a passenger is walking towards the gate, use of untracked navigation is suitable. This feature can be regarded as working similarly to Global Navigation Satellite Systems (GNSS). Short messages are transmitted by UWB anchors mounted either in the gate area or over a wider area in the station. Any UWB enabled mobile device 10 can receive those short messages and use the information contained in them to compute its own position within the station. All of this is accomplished without the need for a UWB enabled mobile device 10 to transmit any UWB message which ensures the privacy of the passenger, since only the passenger UWB enabled mobile device 10 knows its own position within the station. Finally, at the gate, the FiRa Public Transport Profile is designed so only a limited number of UWB enabled mobile devices 10 establish communication. From this limited number of passengers, the FiRa UWB system selects only the one who is actually walking through the gate at a certain time, because only this passenger's fare transaction must be performed. This is achieved by the FiRa ranging capabilities and its in-band data transfer option with a sufficiently high bit rate.

In this context, typically, distance measurements are performed during UWB communication sessions referred to as "ranging sessions". A typical UWB-based ranging session includes one or more messages (i.e. frames that are part of a distance estimation sequence) transmitted from a UWB communication device (which may also be referred to as a "reader") to one or more other UWB communication devices, as well as one or more messages in response to those frames, which are transmitted back to the communication device by the other communication device. It is noted that, depending on the role assigned to the communication device and the other communication devices in this message exchange, either the communication device may act as an "initiator" or "controller" (in which case the other communication devices act as "responders" or "controlees") or the communication device may act as a "responder" or "controlee" (in which case the other communication devices act as "initiators" or "controllers").

Accordingly, an important application of UWB is to perform accurate distance measurements. Since modern location-aware devices should support multiple applications at the same time, also multiple distance measurement sessions (i.e. ranging sessions) should be supported at the same time. Implementing a scheduler is a common way of managing the execution of multiple ranging sessions. For instance, a typical scheduler has a task (e.g. a distance measurement session) and its priority as input.

US 11,646,758 B2 discloses UWB message transmission method and device, method and device for estimating position on the basis of UWB messages.

US 2021/0289320 A1 discloses localization device and method of operating a localization device.

### SUMMARY

According to a first aspect of the present disclosure there is provided a method of locating a UWB-enabled mobile device in a UWB based transit deployment, comprising the steps:
- functionally arranging of transit gates of the UWB based transit deployment in at least two groups;
- performing wireless communication between the transit gates of the at least two groups and the UWB enabled mobile device, wherein the wireless communication of the transit gates of the at least two groups is performed in a time domain by means of specified time offsets in communication messages between the transit gates and the UWB enabled mobile device;
- wherein a first group of transit gates communicates with the UWB enabled mobile device in a first time domain;
- wherein a second group of transit gates communicates with the UWB enabled mobile device in a second time domain; and
- localizing the UWB enabled mobile device by determining distances between the UWB enabled mobile device and three transit gates.

In this way, a trilateration procedure between three known anchor positions of transit gates is performed and implements position determination based on distance values. In this way, advantageously, DL-TDoA infrastructure can be saved to a maximum extent. In effect, by means of the anchors a maximal amount of mobile devices can be recognized. Thus, a scalable transit scenario is implemented without needing additional anchor infrastructure. Discovery process is implemented, in which user are recognized in order to pay via fare transaction. The whole process of discovery, gate selection und fare transaction is thus possible without DL-TDoA infrastructure. A following fare transaction can be carried out as defined by a transit provider. In this way, scalability based on parallel phases instead of sequential phases is supported by means of the proposed method.

According to a further aspect, there is provided UWB based transit deployment, comprising means to carry out the proposed method.

According to a further aspect, there is provide a UWB enabled mobile device, comprising means to communicate with a proposed UWB based transit deployment.

According to a further aspect, there is provided a computer implemented method comprising executable instructions which, when executed by a UWB enabled transit deployment cause said UWB enabled transit deployment to carry out the proposed method.

According to one or more embodiments, the first group of the transit gates operates in assignment slots with a first offset of the message and wherein the second group operates in a time slot with a second offset of message.

According to one or more embodiments, a CM type 3 message is used to specify which gate anchors are functionally arranged in the first and second groups, wherein the CM type 3 message is sent to the transit gates of all groups with the first offset. In this way, all transit gates get notice of the CM type 3 message in a reliable way.

According to one or more embodiments, the CM type 3 message is repeated in a repeater phase to the transit gates of the at least two groups. In this way, a HUS repeater phase is implemented which enables a reception of the CM type 3 message by all participating transit gates of the UWB based transit deployment.

According to one or more embodiments, the transit gates schedule a contention free period, CFP, for secure DS TWR and data transfer to perform a proximity in bound fare transaction. In this way, CFP is used for a communication of an authentication process.

According to one or more embodiments, the UWB enabled mobile device participates in a specified amount of CBR-phases, based on a position of the UWB enabled mobile device in a ranging management list within a ranging round management, RRML list. This may contribute to a reduction of congestion in other phases of the communication process. The UWB enabled mobile device is thus enabled to transmit and receive less, which results in improved operation efficiency. The UWB enabled mobile device can determine which phases are relevant and which transit gates are the nearest. This may be advantageous in an extension of the UWB based transit deployment.

According to one or more embodiments, a scheduling scheme of the communication message is scalable to more than the at least two groups of transit gates. In effect, a duplication of phases within a communication message can be implemented in this way, with a duplication of a slot grid.

### BRIEF DESCRIPTION OF DRAWINGS

The aspects defined above and further aspects of the present disclosure are apparent from the examples of embodiment to be described hereinafter with reference to the appended drawings, which are explained with reference to the examples of embodiment. However, the disclosure is not limited to the examples of embodiment.

All illustrations in the drawings are schematical. It is noted, that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.
- FIG. 1: shows a conventional ranging scenario in a UWB based transit deployment;
- FIG. 2: shows a grouping of transit gates in a UWB based transit deployment according to an embodiment;
- FIG. 3: shows in more detail the grouping of transit gates of FIG. 2;
- FIG. 4: shows in principle phases of a communication signal according to an embodiment of the proposed method;
- FIG. 5: shows a time slot of the communication signal of FIG. 4 in more detail;
- FIG. 6: shows the time slot of the communication signal of FIG. 4 in more detail;
- FIG. 7: shows a timing diagram of a UWB based transit deployment according to an embodiment; and
- FIG. 8: shows in principle a flow of the proposed method.

### DESCRIPTION OF EMBODIMENTS

The proposed method is performed during phase 2 shown in FIG. 1 and disclosed in the above mentioned FiRA paper. The FiRa published whitepaper uses DL-TDoA method to localize the user but this solution may be expensive for a service provider and can cause more electric power consumption on the UWB enabled mobile device 10. The proposed solution comprises a method where the UWB based transit deployment 100 schedules the ranging in group of gate anchors allocated to operate in the overlapping slot but with different time offsets and the mobile device 10 can select the appropriate group for gate anchors to perform the fare transaction without the user involvement. The proposed method advantageously provides a flexibility for the user to move from one transit gate to another transit gate in crowded situations and perform the fare transaction as late as possible.

The present disclosure allows the omission of UWB based DL-TDoA, thus resulting in reduced deployment costs for a service provider and the UWB enabled mobile device 10 needs to keep the RX active for the duration where it localizes its position in relation to the transit gate. Due to the fact, that a number of transit gates can vary from station to station and it is thus not necessary to install DL-TDoA in stations with only one or two transit gates. Hence, the proposed method can be used to select a user walking through the transit gate at a certain time without involving DL-TDoA procedure.

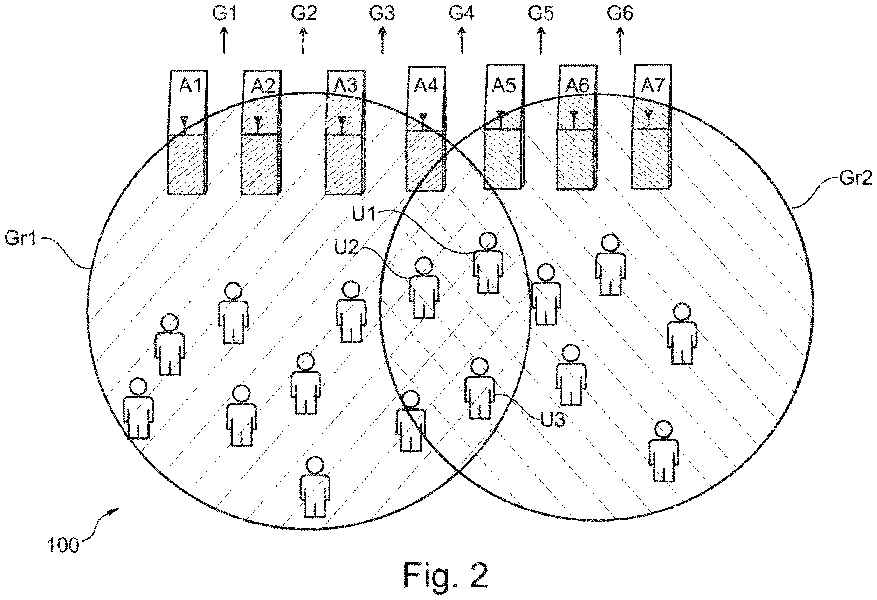

FIG. 2 shows an exemplary of a proposed scenario of a UWB based transit deployment 100 (e.g. transit station of a public transport arrangement) for an implementation of the proposed method. One recognizes a number of persons U1... Un walking in the scenario. Each user is equipped with a UWB enabled mobile device (not shown) to trigger a UWB enabled navigation application. To this end, communication sessions are performed between the UWB enabled mobile device and gate anchors A1...A7 of transit gates G1...G6. The users are navigated by means of the UWB communication sessions between the UWB enabled mobile devices in order to find the gate G1...G6 with which a fare transaction is intended to be performed.

The UWB communication sessions perform a location procedure via distance measurements between three specified gate anchors A1...A7 of the transit gates G1... G6 and the UWB enabled mobile devices being equipped with a UWB communication unit. For example, the UWB enabled mobile device can be NFC-enabled and can thus automatically perform a fare transaction with the transit gate G1 without a need to bring the UWB enabled mobile device in contact with the transit gate G1. A pass of the transit gate G1 of the second communication device suffices to perform the fare transaction. As a result, at the same time there are performed a localization session via distance measurements (trilateration) between three gate anchors of the corresponding gates and the UWB enabled mobile device.

Most of the time, the UWB communication sessions are performed as so called "hybrid sessions", which means that in relation to the transit gate there are carried out two parts of the UWB communication session. A first part (content access period, contention based ranging) performs an invitation to all devices in the environment of the gate G1 to take part at the second UWB communication session, which means that the UWB enabled mobile device is invited to answer.

If the UWB enabled mobile device has approached sufficiently to the transit gate, the UWB enabled mobile device is invited to answer. The UWB enabled mobile device then accepts the invitation and communicates with the transit gate. The second part of the UWB communication session is the transaction between the transit gate and the UWB enabled mobile device.

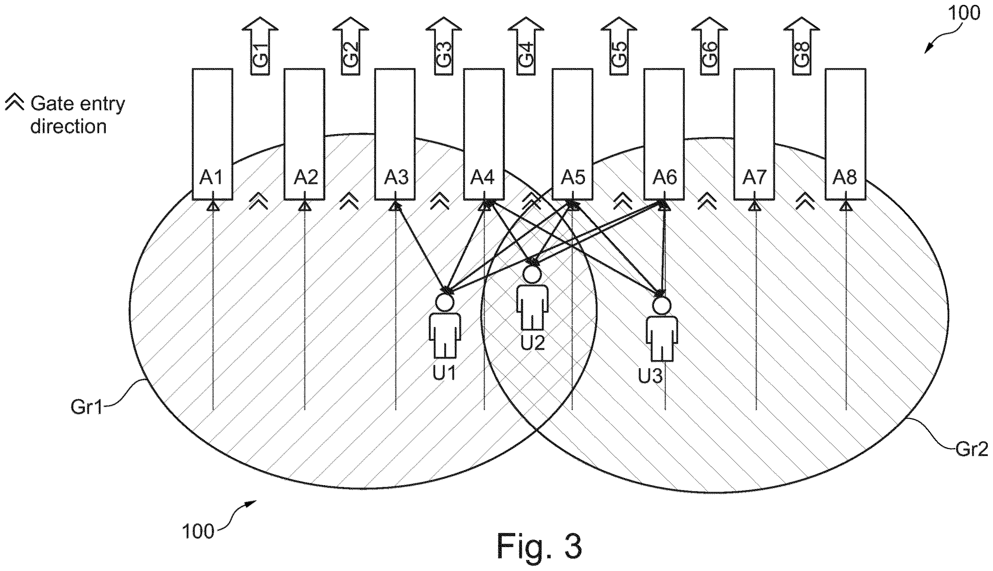

As shown in FIG. 3, an entry space between two gate pillars represents a transit gate G1... Gn. The pillars are equipped with UWB gate anchors A1...A8 with directional antenna facing towards the users U1... U3, each of them carrying a UWB enabled mobile device (not shown). In the scenario of FIG. 3 there are eight gate anchors A1...A8 resulting in seven transit gates G1...G7. However, some UWB based transit deployments 100 may even have more than seven transit gates or fever than seven gates and the present disclosure is not limited to a specific number of transit gates.

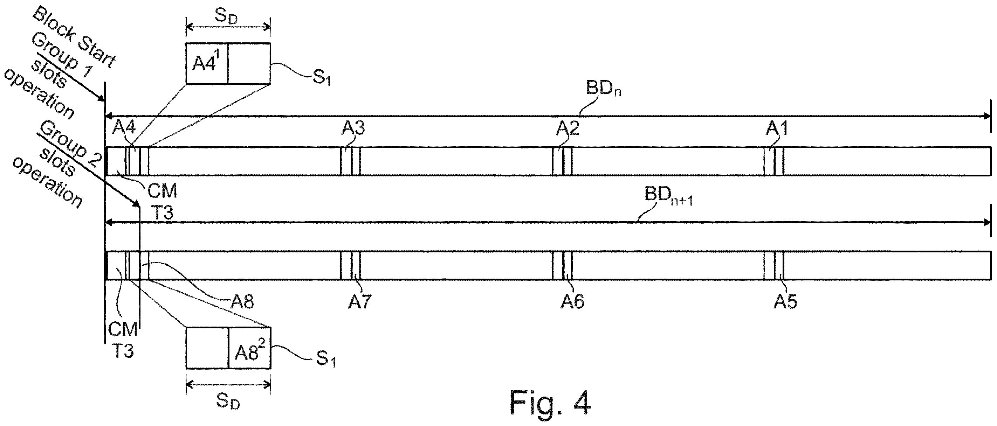

A slot allocation in a communication message (explained in the context of FIG. 4) is done with the principle that each transit gate G1... Gn has two gate anchors and each gate anchor has its own dedicated contention phase. The UWB based transit deployment 100 as illustrated hereinafter is realized with reference to the gate and anchors placement shown in FIG. 3. In the scenario of FIG. 3 the gate anchor A4 acts as a hybrid session controller, whereas the other gate anchors act as hybrid session controlees. The gate anchors A1, A2, A3, A4 schedules the CAP UWB to perform contention-based ranging as the initiators within the hybrid session, these gate anchors are represented in a first group Gr1. On the other hand, the gate anchors A5, A6, A7 and A8 schedules the CAP to perform the contention-based ranging (CBR) as the initiators within the same hybrid session in the same slots as the gate anchors A1, A2, A3 and A4 respectively, these gate anchors are represented in a second group Gr2.

Both at least two groups Gr1, Gr2 of gate anchors of transit gates operate in the following way:
- the at least two groups Gr1, Gr2 are functionally separated with a time offset in communication messages
- all the transit gate anchors belonging to a group operate in their respective phases at a transmission offset indicated by means of a CM type 3 (control message type 3) message
- the blocks of the hybrid session are preferably aligned to +/- 100 ppm with respect to the CM type 3 message and once the synchronization with the block is done, then the phases operate at the designated offset as indicated in the CM type 3 message

FIG. 4 represents a signal showing the operation of the transit gate anchors in their respective phases. All gate anchors (except gate anchor A8) schedule a contention free period (CFP) for secure DS-TWR (double sided two way ranging) and data transfer to perform the proximity bound fare transaction (not shown in FIG. 4). A so called "ranging round management list" (RRML) is generated in a sorted order of the physical placement of the gate anchors G1... Gn with respect to the designated HUS (hybrid UWB session) controller gate anchor in the UWB based transit deployment 100. For example, the phase belonging to the controller gate anchor is the first element of the RRML and the phases belonging to the left of the controller gate anchor follow ascending order of the gate anchor number, the phases belonging to the right of the controller gate anchor shall follow descending order of the gate anchor number. In the hybrid session, the device operates within the slot offset as explained in more detail below.

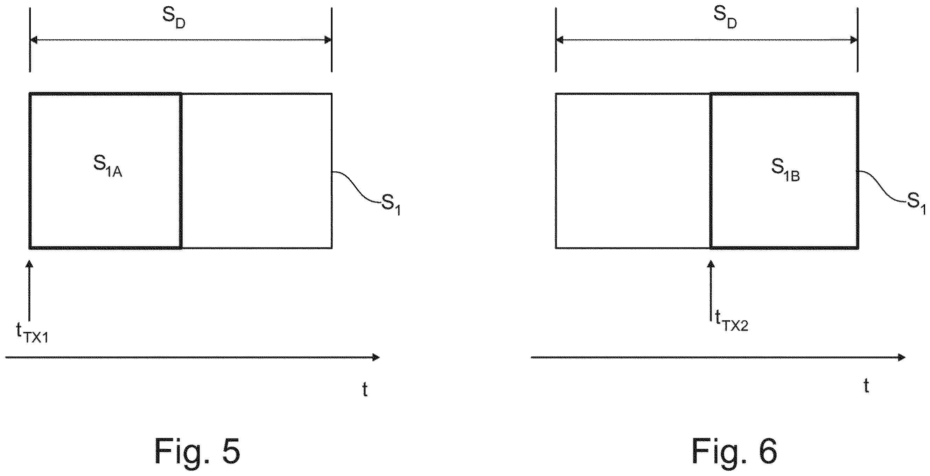

Each assignment slot S1... Sn in HUS comprises two transmission (Tx) offsets. For example, if the assignment slot duration is 1ms, then the first Tx offset starts from the beginning of the assignment slot and the second transmission offset will be at 500µsec from the beginning of the assignment slot. The frame transmission shall not cross the offset boundary. The overlapping phases are designated to operate in the corresponding offsets as indicated in the FIGs. 5, 6, for example the gate anchor A1 performs the CBR (contention based ranging) and data transfer in 1^{st} offset of the assignment slot and the gate anchor A5 performs the CBR and data transfer in the second offset of the assignment slot.

The CM Type 3 message is transmitted with a first offset always, this is applicable to the gate anchors repeating the CM Type 3 message.

FIG. 4 shows a slot having a slot duration SD within a grid of phases of a communication message. In a first section of the assignment slot S₁ a communication takes place with the gate anchor A4. A second section of the assignment slot is used for the communication with the gate anchor A8. As a result, the whole assignment slot S1 does not overlap communications with the gate anchors A4, A8, which are thus addressed unambiguously and sequentially. As can be seen, the same principle is applied to communication processes with pairs of gate anchors A3/A7 and A2/ A6 and A1/A5, respectively. In effect, groups of two gate anchors are addressed within the assignment slot S1 under usage of different time offsets. This enables the unique communication of the gate anchors with the groups of gate anchors. One recognizes a block duration BDₙ, in which groups of assignment slots are transmitted, during each slot addresses two gate anchors in a non-overlapping way. It has to be noted, that the number two of slot sections within the assignment slots is exemplary in this context, needless to say that there could be more numbers of slot sections, thus enabling an even greater amount of gate anchors within one assignment slot. This principle of communication is performed both by gate anchors of the transit gates as well as by UWB enabled mobile devices 10 of the at least two groups Gr1, Gr2 of users as depicted in FIG. 3.

FIG. 5 shows a structure of an assignment slot S1 with respect to time t in more detail. One recognizes a start of a transmission of a transmitter TX of a directional gate anchor at the beginning of the assignment slot S1 (i.e. offset = zero). A whole duration S_{D} of the assignment slot S1 is divided into two sections, wherein a first section S_{1A} of the assignment slot S1 is used for a communication of a first gate anchor (e.g. gate anchor A4) with the UWB enabled mobile device (e.g. mobile phone).

A second section S_{1B} of the assignment slot S1 is used for a communication of a second directional gate anchor (e.g. gate anchor A8) of a pair of gate anchors with the UWB enabled mobile device as shown in FIG. 6. One recognizes a start of a transmission of a transmitter TX of a transfer gate at a time t_{TX2}, which is preferably at half the duration of the assignment slot S1.

As a result, specific time offsets are used to carry out a communication processes between gate anchors of transit gates and UWB enabled mobile devices 10. Consequently, an unambiguous localization of the UWB enabled mobile devices 10 within the at least two groups Gr1, Gr2 can take place by means of trilateration between three gate anchors and the UWB enabled mobile device 10. Advantageously, in this way, a data transaction (e.g. fare transaction) can be carried out between the UWB-enabled mobile device 10 and a particular transit gate.

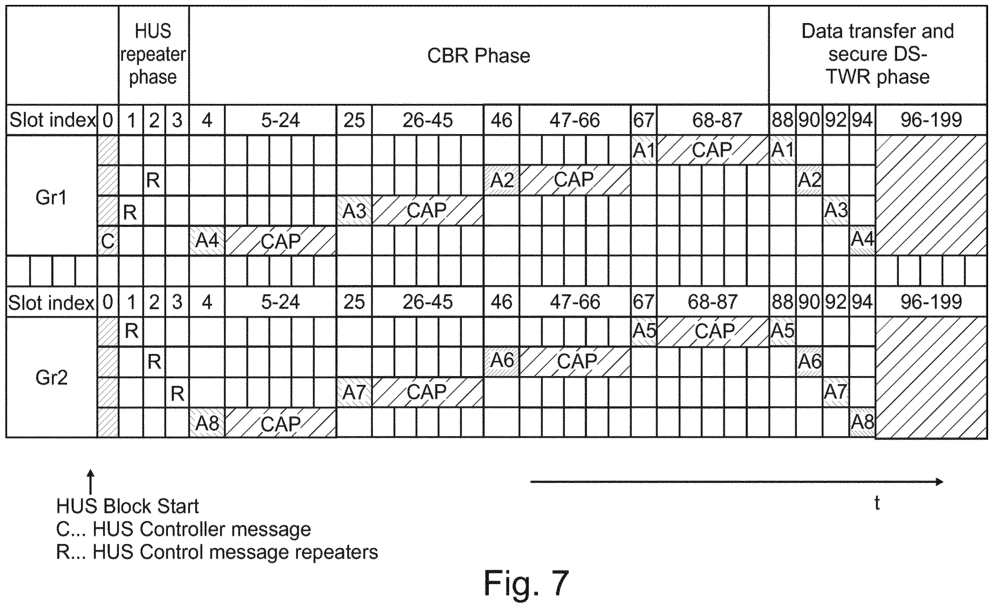

FIG. 7 shows a complete timing diagram of a communication between gate anchors of the first and second groups Gr1, Gr2 of gate anchors with an UWB enabled mobile device (not shown). One recognizes a scheduling of three phases: HUS repeater phase (slots #1... #3), CBR phase (slots #4... #87) and data transfer and secure DS-TWR phase (slots #88... #199). A start of the whole scheduling starts with a control message type 3 (HUS controller message), which is transmitted in slot#0 (HUS Block start) by gate anchor A4 and which is received by all gate anchors by means of repetition processes R in the HUS repeater phase, in which said control message type 3 is transmitted to the remaining gate anchors under usage of gate anchors.

The repetitions of the CM type 3 messages in the HUS repeater phase is carried out by the UWB based transit deployment 100. Transit station gate pillars are mounted with the gate anchors which have directional antennas and in this setup of gate anchors the gate anchor which is at the far end of the UWB based transit deployment 100 may not be able to receive the CM type 3 message from the first gate anchor. Hence, the HUS scheme will perform CM type 3 repetition by the gate anchors in the following way:
- the gate anchors synchronizes to the HUS block start in slot #0
- the HUS controller indicates which gate anchors to act as repeaters of the CM Type 3 message in the designated slot index
- the HUS controlee devices (gate anchors) shall have the HUS repeater phase created
- the HUS repeater phase is the first phase present in the RRML of the CM Type 3 message
- the HUS repeater message has the same content as the HUS CM type 3 message
- the HUS repeater phase has the exemplary session ID value 0x52455054 (ASCII: REPT) and it is a CFP phase
- the gate anchors acting as the HUS controlee device listen to all the slots of the HUS repeater phase and transmit the CM type 3 message in the designated slot in the following way: the gate anchors which are able to receive the repeater CM type 3 message calculate the HUS block start based on the receiving slot index. For example, if the HUS repeater phase Start slot index = 1 and the end slot index = 4, then the received repeater CM type 3 Slot index_{R} = 2, then block start is calculated in the following way: (HUS repeater phase (Slot indexR) - HUS repeater phase (Starts slot index) ) × SLOT_DURATION + CM Type 3 slot duration

The slot for the repeating CM type 3 by corresponding gate anchor shall be configured, wherein, within the HUS repeater phase, the HUS phase offset field of the CM Type 3 is ignored by the repeater gate anchors. The gate anchor acting as the HUS controller is assigned with the list of repeater anchor device short address.

The HUS repeater phase is followed by the contention based ranging (CBR) phase, as having been illustrated in more detail above in the context of FIG. 4, wherein in the CBR phase communications with pairs of gate anchors A4/A8, A3/A7, A2/A6 and A1/A5 with the UWB enabled mobile device are performed. Finally, in the data transfer and secure DS-TWR phase, data transactions (e.g. fare transactions and date transmission) are performed between a specified gate and the UWB enabled mobile device. In effect, said data transfer and secure DS-TWR phase is carried out with a specified gate having been determined by a trilateration process, which results in a localization of the UWB enabled mobile device by means of distance measurements of three gate anchors and the UWB enabled mobile device.

When there are large number of transit gates within the UWB based transit deployment 100, it may not be practical for a UWB enabled mobile device 10 to participate in all the phases, to reduce electric power and effectively involve in the transaction with specific gate. Therefore, the UWB enabled mobile devices 10 participate in the phases where they are consistently within the close proximity to the gate and this information shall be used to participate in the CBR initiated by the gate anchors. The following requirements are applicable to skip participating in the CBR phases. The UWB enabled mobile device considers more than two consecutive occurrences of its address in the RML entry to consider the phase as the most favorable phase to participate.

If the RML entry criteria is satisfied with a gate anchor, then the UWB enabled mobile device participates with the phases belonging to adjacent gate anchors. The phases appearing immediately before and after the current phase in the RRML field of the CM Type 3 message are implicitly considered as the adjacent gate anchors. In this way, the UWB enabled mobile devices skip participating in the rest of the HUS CBR phases when the above conditions are satisfied for the phase participation.

The present disclosure proposes a UWB based transit deployment being able to track a user carrying a UWB enabled mobile device until the point where they commit to transaction, wherein the users are randomly moving in deployment infrastructure, which can vary geographically. The proposed method and UWB transit deployment provides a system solution to operate with multiple UWB based transit gates and massive number users without any additional infrastructure, like DL-TDoA. As a result, the present disclosure is applicable to UWB products for the transit use case.

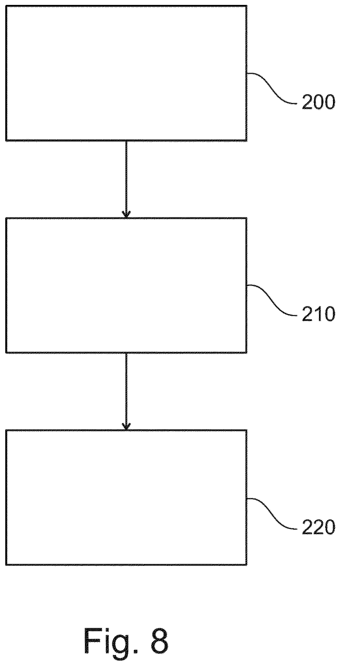

FIG. 8 shows in principal a flow of the proposed method.

In a step 200, a functional arrangement of transit gates G1... Gn of the UWB based transit deployment 100 in at least two groups Gr1...Grn is performed.

In a step 210, wireless communication is performed between the transit gates G1... Gn of the at least two groups Gr1...Grn and the UWB enabled mobile device 10, wherein the wireless communication of the transit gates of the at least two groups is performed in a time domain by means of specified time offsets in communication messages between the transit gates G1... Gn and the UWB enabled mobile device 10, wherein a first group Gr1 of transit gates G1... Gn communicates with the UWB enabled mobile device 10 in a first time domain, wherein a second group Gr2 of transit gates G1... Gn communicates with the UWB enabled mobile device 10 in a second time domain.

In a step 220 the UWB enabled mobile device 10 is localized by determining distances between the UWB enabled mobile device 10 and three transit gates G1... Gn.

Needless to say, that numbers and natures of UWB communication sessions mentioned in the context of the present disclosure are merely exemplary. This means that the UWB communication sessions can be used in any number to perform e.g. all kinds of ranging, data transfer, localization, etc. The UWB communication sessions in the context of the present disclosure can be at least one of the following: DL-TDoA session, double sided two way ranging DS-TWR session, UL-TDoA session, One-Way-AoA measurement session, single sided SS- TWR session, Data Transfer session, etc.

The present disclosure proposes a method where the UWB based transit deployment 100 schedules a ranging in group of transit gate anchors allocated to operate in an overlapping slot but with different time offsets and the UWB enabled mobile device 10 can select the appropriate group for gate anchors to perform the fare transaction without the user involvement. The proposed method provides a flexibility for the user to move from one transit gate to another transit gate of the UWB based transit deployment in crowded situation and perform a fare transaction as late as possible.

The proposed method can be implemented at least partially as a software which can be stored in a computer readable memory or at least partially as a firmware or at least partially as a hardware (e.g. a UWB radar chip). The chip does mainly the distance measurements (Time-of-Flight measurements), wherein a host configures details which of the diverse UWB sessions should act as the primary session.

Hereinbefore, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment can assume orientations different than those illustrated in the figures when in use. Additionally unless expressly stated to the contrary, the terms "first", "second", "third", etc. are intended to distinguish the particular nouns that modify (e.g. session, device, element, unit, condition, node, module, activity, session, step, operation, etc.). Unless expressly stated to the contrary, the use of these terms is not intended to indicate any type of order, rank, importance, temporal sequence, or hierarchy of the modified noun. For example, "first X" and "second X" are intended to designate two "X" elements that are not necessarily limited by any order, rank, importance, temporal sequence, or hierarchy of the two elements. Furthermore, as referred to herein, "at least one of " and "one or more of' can be represented using the "(s)" nomenclature (e.g. one or more element(s)).

Moreover, it should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims. The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document. Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

### Reference Numerals:

- 1: ceiling
- 10: UWB enabled mobile device
- 100: UWB based transit deployment
- 200.. 220: method steps
- A1... An: gate anchors
- G1... Gn: transit gates
- Gr1...Grn: groups
- S1...Sn: assignment slots
- S_{D}: slot duration
- t: time

## Claims

1. A method of locating a UWB enabled mobile device (10) in a UWB based transit deployment (100), comprising the steps:
- functionally arranging of transit gates (G1... Gn) of the UWB based transit deployment (100) in at least two groups (Gr1...Grn);
- performing wireless communication between the transit gates (G1... Gn) of the at least two groups (Gr1...Grn) and the UWB enabled mobile device (10), wherein the wireless communication of the transit gates of the at least two groups is performed in a time domain by means of specified time offsets in communication messages between the transit gates (G1...Gn) and the UWB enabled mobile device (10);
- wherein a first group (Gr1) of transit gates (G1... Gn) communicates with the UWB enabled mobile device (10) in a first time domain;
- wherein a second group (Gr2) of transit gates (G1... Gn) communicates with the UWB enabled mobile device (10) in a second time domain; and
- localizing the UWB enabled mobile device (10) by determining distances between the UWB enabled mobile device (10) and three transit gates (G1...Gn).

2. Method according to claim 1, wherein the first group (Gr1) of the transit gates (G1... Gn) operates in assignment slots (S1... Sn) with a first offset of the message and wherein the second group operates in a time slot with a second offset of message.

3. Method according to claim 2, wherein a CM type 3 message is used to specify which gate anchors are functionally arranged in the first and second groups (Gr1, Gr2), wherein the CM type 3 message is sent to the transit gates of all groups with the first offset.

4. Method according to claim 3, wherein the control message CM type 3 is repeated in a repeater phase (R) to the transit gates of the at least two groups (Gr1, Gr2).

5. Method according to any of the preceding claims, wherein the transit gates schedule a contention free period, CFP, for secure DS TWR and data transfer to perform a proximity in bound fare transaction.

6. Method according to any of the preceding claims, wherein the UWB enabled mobile device (10) participates in a specified amount of CBR-phases, based on a position of the UWB enabled mobile device (10) in a ranging management, RML list within a ranging round management, RRML list.

7. Method according to any of the preceding claims, wherein a scheduling scheme of the communication message is scalable to more than the at least two groups (Gr1, Gr2) of transit gates.

8. UWB based transit deployment (100), comprising means to carry out the method according to any of the preceding claims.

9. UWB enabled mobile device (10), comprising means to communicate with a UWB based transit deployment (100) according to claim 8.

10. Computer implemented method comprising executable instructions which, when executed by a UWB enabled transit deployment (100) cause said UWB enabled transit deployment (100) to carry out the method of any of the claims 1 to 7.
